# EUROPÄISCHE PATENTSCHRIFT

(11) **EP 3 327 055 B1**
(45) Veröffentlichungstag und Bekanntmachung des Hinweises auf die Patenterteilung: **15.09.2021**
(21) Anmeldenummer: 17202233.7
(22) Anmeldetag: 17.11.2017
(51) Int. Cl.: C08G 18/48, C08G 18/66, C08G 18/76, C08G 18/32, C08G 18/42, C08G 18/44, C08L 73/00, F16J 15/10

(54) **POLYMERMISCHUNG FÜR DICHTUNGEN**
POLYMER BLEND FOR SEALS
MÉLANGE POLYMÈRE POUR JOINTS D'ÉTANCHÉITÉ

(30) Priorität: 28.11.2016 DE 102016013868
(43) Veröffentlichungstag der Anmeldung: 30.05.2018
(73) Patentinhaber: Carl Freudenberg KG, 69469 Weinheim (DE)
(72) Erfinder: Fietz, Roland, 35279 Neustadt-Momberg (DE); Barillas, Gonzalo, 36304 Alsfeld-Altenburg (DE)

(56) Entgegenhaltungen:
- EP-A2- 0 339 747
- WO-A1-00/20486
- WO-A1-00/20512
- WO-A2-2016/010407
- DE-A1- 19 817 809
- DE-A1-102013 021 027

## Beschreibung

Die Erfindung betrifft Dichtungsringe, enthaltend ein Polymergemisch, das mindestens ein thermoplastisches Polyketon und mindestens ein thermoplastisches Polyurethan enthält. Die Erfindung betrifft weiterhin die Verwendung der Polymermischung, Verfahren zur Herstellung von Dichtungsringen unter Verwendung der Polymermischung sowie danach erhältliche Dichtungsringe.

### Stand der Technik

Dichtungen besitzen die Aufgabe, ungewollte Stoffübergänge zwischen Räumen, die eine gemeinsame Grenzfläche haben, zu verhindern oder zu begrenzen. Bei dynamischen Dichtungen ist diese Grenzfläche durch eine beträchtliche Bewegung charakterisiert. Bei statischen Dichtungen fehlt diese Bewegung.

Dichtungen aus polymeren Materialien sind schon lange im Stand der Technik bekannt und werden insbesondere für Hydraulik- und Pneumatikanwendungen eingesetzt. Unter anderem werden diese Elemente als ringförmige Dichtungen etc. ausgebildet. In diesen Anwendungen haben sich Gummimaterialien (Elastomere), insbesondere thermoplastische Elastomere, Polytetrafluorethylen (PTFE) und weitere Kunststoffe als geeignete Materialien etabliert.

In jüngerer Zeit findet ebenfalls das thermoplastische Polymer Polyketon vermehrt Anwendung. Polyketon zeichnet sich durch in diesem Anwendungsbereich vorteilhafte Eigenschaften, wie z.B. Härte, Verschleißfestigkeit, Extrusionsfestigkeit, Medienbeständigkeit, gutes Reibungsverhalten und UV-Beständigkeit aus.

Versuche haben jedoch ergeben, dass die hohe Steifigkeit und begrenzte Dehnbarkeit zu Einschränkungen bei diversen Anwendungen, insbesondere zu Problemen bei der Montage, führen können. Bei der Montage werden Dichtungen großen Verformungen ausgesetzt, bei denen große Kräfte auf das Material wirken. Das Material muss in der Lage sein, solche Verformungen auszuhalten, ohne dabei Schaden zu nehmen. Die nötigen Montagekräfte müssen vom Monteur oder entsprechenden Geräten aufgebracht werden. Das Material sollte eine gewisse Elastizität aufweisen. Die erwünschte Elastizität scheint jedoch bei Polyketonen eine der Härte und Stabilität gegenläufige Eigenschaft darzustellen.

Im Stand der Technik ist bekannt, dass die mechanischen Eigenschaften von Polyketonen durch Mischungen mit anderen Polymeren verbessert werden können.

DE 198 17 809 A1 offenbart Mischungen eines thermoplastischen Polyketons und eines thermoplastischen Polyurethans zur Verbesserung der Tieftemperaturzähigkeit, insbesondere der Schlagzähigkeit. Eine Verwendung der Mischung zur Herstellung von Dichtungen, insbesondere ringförmigen Dichtungen, wird nicht offenbart.

WO 00/20486 offenbart die von Verwendung einer Mischung enthaltend Polyketon und thermoplastisches Polyurethan zur Herstellung von KFZ Anbauteilen. Im Vergleich zu reinem Polyketon besitzt die Mischung eine leicht verbesserte Tieftemperaturzähigkeit und ein verringerter Elastizitätsmodul. Eine Verwendung der Mischung zur Herstellung von Dichtungen, insbesondere ringförmigen Dichtungen, wird nicht offenbart.

US 5,166,252 offenbart die Verbesserung von mechanischen Eigenschaften von glasfaserverstärkten Polyketonkunststoffen durch Zugabe von thermoplastischem Polyurethan. Die verstärkten Mischungen weisen im Vergleich zu den verstärkten Polyketonen eine verbesserte Schlagzähigkeit und Bruchdehnung auf. Eine Verwendung der Mischung zur Herstellung von Dichtungen, insbesondere ringförmigen Dichtungen, wird auch hier nicht offenbart.

Die DE 10 2013 021027 A1 offenbart die Verwendung von reinem thermoplastischem Polyurethan (TPU) zur Herstellung von Dichtungen. Das Polyurethan ist erhältlich durch die Umsetzung von Isocyanaten mit einer Polyolkomponente, umfassend mindestens ein Polyesterdiol, mindestens ein Polyetherdiol und mindestens ein Polycarbonatdiol, sowie mindestens einem weiteren Diol. Das offenbarte TPU zeichnet sich durch eine hohe Hydrolyse- und Medienbeständigkeit sowie eine gute Zugfestigkeit im Vergleich zu anderen Polyurethanen aus. Die spezifische Verwendung des thermoplastischen Polyurethans zur Herstellung von ringförmigen Dichtungen wird nicht offenbart. Mischungen von thermoplastischem Polyurethan mit anderen Polymeren werden ebenfalls nicht offenbart.

Rotationssymmetrische, insbesondere runde, Dichtungen aus thermoplastischem Material werden typischerweise mittels Spritzgussverfahren hergestellt. Um die Füllung von rotationssymmetrischen Kavitäten in entsprechenden Formwerkzeugen zu erreichen, können als Angussvarianten beispielsweise Schirm-Angüsse oder Ring-Angüsse verwendet werden. Diese haben jedoch den Nachteil, dass die Anguss-Geometrien vom eigentlichen ringförmigen Produkt durch nachgeschaltete Arbeitsgänge abgetrennt werden müssen, was entsprechende Kosten verursacht. Daher werden diese Verfahren für eine rationelle Fertigung meist nur in Ausnahmefällen eingesetzt.

Als moderne und kostengünstigere Herstellungsvariante für rotationssymmetrische Formen hat sich der Punkt- oder Tunnel-Anschnitt etabliert. Dabei wird dem Kunststoff der Eintritt in die Kavität des Formwerkzeuges über eine oder mehrere seitliche Einlässe ermöglicht. Eine Nacharbeitung des Produkts entfällt hierbei in der Regel, da das Produkt von den Anguss-Geometrien bereits beim Auswerfen aus der Spritzgussmaschine abgetrennt wird. Solche Produkte besitzen meist auf der Seite, die der Anguss-Stelle gegenüberliegt, eine Zusammenflussstelle, an welcher die Schmelzfronten des Kunststoffes beim Ausgießen der Form zusammenfließen. Das so hergestellte Kunststoffprodukt weist in einem Teilbereich, welcher der Zusammenflussstelle entspricht, eine verringerte mechanische Stabilität auf. Dieser Bereich wird nachfolgend als "Bindenaht" bezeichnet. An solchen Schwachstellen kann es unter Anwendung der zur Montage von Dichtungen notwendigen Kräfte oder unter den während der bestimmungsgemäßen Verwendung der Dichtungen wirkenden Kräften zum Bruch oder zu einer unerwünschten, nicht reversiblen Formveränderung von ringförmigen Dichtungen kommen.

Standardmäßig wird die Untersuchung der mechanischen Eigenschaften von Kunststoffmaterialien durch Zugprüfung nach DIN- oder ISO-Regelwerken an Normprüfkörpern, wie Zugstäben oder Schulterstäben, durchgeführt. Diese besitzen in der Regel keine Bindenähte, wie dies bei den genannten rotationssymmetrischen Formkörpern der Fall ist. Daher erfolgte die Prüfung der Zugfestigkeit von Kunststoffmaterialien im Stand der Technik bisher ohne Berücksichtigung von Bindenähten. Für übliche rotationssymmetrische, insbesondere runde Dichtungen ist jedoch der Einfluss der Bindenaht möglicherweise von essentieller Bedeutung. Die mangelnde Zugfestigkeit von Formteilen, wie Dichtungen, die eine Bindenaht aufweisen, wird im oben genannten Stand der Technik nicht adressiert. Insbesondere adressiert der Stand der Technik nicht die Instabilität der Bindenaht.

### Aufgabe der Erfindung

Der Erfindung liegt die allgemeine Aufgabe zugrunde, Dichtungselemente bereitzustellen, die die zuvor beschriebenen Nachteile des Stands der Technik überwinden. Insbesondere sollen Dichtungselemente, speziell rotationssymmetrische Dichtungen, bereitgestellt werden, welche verbesserte mechanische Eigenschaften aufweisen. Dabei sollten die Dichtungselemente verbesserte Dehnungseigenschaften und somit eine verbesserte Montagefähigkeit und/oder eine verbesserte Stabilität aufweisen. Insbesondere sollten Dichtungselemente bereitgestellt werden, in den die vorteilhaften Eigenschaften der Härte und Stabilität von Polyketonpolymeren mit der scheinbar gegenläufigen Eigenschaft einer erhöhten Elastizität kombiniert werden.

In einer weiteren Aufgabe soll die Stabilität von Dichtungen, die durch ein Verfahren erhalten werden, bei dem sich eine Zusammenflussstelle bildet, verbessert werden. Weiterhin sollten geeignete Polymermaterialien und einfache Herstellungsmethoden zur Verfügung gestellt werden.

### Offenbarung der Erfindung

Überraschenderweise wird die der Erfindung zugrundeliegende Aufgabe durch die Dichtungsringe, Verfahren und Verwendungen gemäß der Patentansprüche gelöst.

Gegenstand der Erfindung ist ein Dichtungselement enthaltend eine Polymermischung, die mindestens ein thermoplastisches Polyketon und mindestens ein thermoplastisches Polyurethan enthält, wobei das Dichtungselement ein Dichtungsring ist.

Ein Dichtungselement umfasst jegliches Element, das den ungewollten Übergang von Stoffen zwischen Räumen, die eine gemeinsame Grenzfläche haben, verhindert oder begrenzt. Bei dynamischen Dichtungen ist diese Grenzfläche durch eine beträchtliche Bewegung charakterisiert. Bei statischen Dichtungen fehlt diese Bewegung. Die Räume können durch Elemente aus Metall, Legierung, Keramik und/oder Glas gebildet werden. Bei den Stoffen kann es sich um ein Fluid, insbesondere Wasser, Kraftstoffe, Öle oder Gase handeln. Die Dichtungselemente können auch als Führungen oder Abstreifelemente ausgebildet sein. Bevorzugt werden die Dichtungsringe entsprechend der Erfindung im Fahrzeugbau oder für Hydraulik- und Pneumatikanwendungen verwendet.

Die erfindungsgemäßen Dichtungselemente enthalten eine Polymermischung. Diese kann eine verträgliche oder teilverträgliche Polymermischung sein. Dabei bedeutet "verträglich", dass die Polymere homogen mischbar sind und bei formgebenden Prozessen keine Entmischung eintritt. Vorzugsweise sind die Polymermischungen verträgliche Polymermischungen.

Die Polymermischung enthält mindestens ein thermoplastisches Polyurethan. Thermoplastische Polyurethane zeichnen sich durch eine Kombination hochwertiger mechanischer Eigenschaften in Kombination mit den Vorteilen einer kostengünstigen thermoplastischen Verarbeitbarkeit aus. Durch die Verwendung unterschiedlicher chemischer Aufbaukomponenten lässt sich eine große Variationsbreite mechanischer Eigenschaften erzielen.

Thermoplastische Polyurethane sind durch Umsetzung von mindestens einem organischen Diisocyanat mit mindestens einem Polyol erhältlich. Weiterhin können bei der Umsetzung der Komponenten mindestens ein Kettenverlängerer und/oder gegebenenfalls mindestens ein Vernetzer verwendet werden. Über die eingesetzten Polyole lassen sich eine Vielfalt von Eigenschaftskombinationen gezielt einstellen.

Als organische Diisocyanate zur Herstellung der Polyurethane kommen beispielsweise aliphatische, cycloaliphatische, araliphatische, heterocyclische und aromatische Diisocyanate in Betracht. Beispielsweise können aliphatische Diisocyanate wie Hexamethylendiisocyanat, cycloaliphatische Diisocyanate wie Isophorondiisocyanat, 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexylmethandiisocyanat, sowie die entsprechenden Isomerengemische und aromatische Diisocyanate wie 2,4-Toluylendiisocyanat oder 3,3'-Dimethyl-4,4'-biphenyldiisocyanat oder 1,4-Phenylendiisocyanat, Gemische aus 2,4- und 2,6-Toluylendiisocyanat, Diphenylmethandiisocyanate wie 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte, flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat verwendet werden.

In einer bevorzugten Ausführungsform ist das thermoplastische Polyurethan durch Umsetzung eines aromatischen Diisocyanats, bevorzugt durch Umsetzung eines Diphenylmethandiisocyanats, Dimethylbiphenyldiisocyanats oder Phenylendiisocyanats erhältlich. Das Diphenylmethandiisocyanat ist bevorzugt ein 4,4'-Diphenylmethandiisocyanat. Die Verwendung von 4,4'-Diphenylmethandiisocyanat wirkt sich vorteilhaft auf die Mischungseigenschaften des erhaltenen TPUs aus. Das Dimethylbiphenyldiisocyanat ist bevorzugt ein 3,3'-Dimethyl-4,4'-biphenyldiisocyanat. Die Verwendung von 3,3'-Dimethyl-4,4'-biphenyldiisocyanat wirkt sich insbesondere vorteilhaft auf die Kristallisationseigenschaften des erhaltenen TPUs aus. Das Phenylendiisocyanat ist bevorzugt ein 1,4-Phenylendiisocyanat.

In der am meisten bevorzugten Ausführungsform ist das organische Diisocyanat 4,4'-Diphenylmethandiisocyanat. Dieses ist unter dem Markennamen Desmodur 44M von der Firma Covestro, Leverkusen, Deutschland, kommerziell verfügbar.

Das erfindungsgemäß verwendete thermoplastische Polyurethan ist durch die Umsetzung eines Polyols erhältlich, bevorzugt durch die Umsetzung eines Polyols, ausgewählt aus mindestens einem Polycarbonat, Polyester oder Polyether.

Das Polyol kann auch als Gemisch von zwei oder mehr verschiedenen Polyolen umgesetzt werden. Das Gemisch kann jeweils ein oder mehrere Polycarbonate, Polyester oder Polyether enthalten, wobei auch nur zwei der genannten Verbindungsklassen in dem Gemisch enthalten sein können. Die Verwendung verschiedener Polyole ist vorteilhaft, da dadurch eventuell negative Eigenschaften des einen Polyols durch die Eigenschaften eines anderen Polyols ausgeglichen werden können.

Im Allgemeinen sind die verwendeten Polyole linear. Dies ist vorteilhaft, da durch den Einsatz linearer Polyole Polyurethane mit guter thermoplastischer Verarbeitbarkeit erhalten werden.

Die verwendeten Polyole weisen bevorzugt jeweils ein Molekulargewicht von 500 g/mol bis 5.000 g/mol auf. Bevorzugt werden Polyole mit einem Molekulargewicht von 1.000 g/mol bis 3.000 g/mol, und besonders bevorzugt von 1.500 g/mol bis 2.500 g/mol zur Herstellung des Polyurethans eingesetzt. Die Einstellung der entsprechenden Molekulargewichte in den genannten Bereichen ermöglicht insbesondere eine gute Verarbeitbarkeit der erhaltenen Polyurethane im Spritzguß.

Das Polyol in Form eines Polyester kann beispielsweise aus Dicarbonsäuren mit 2 bis 12 Kohlenstoffatomen, vorzugsweise 4, 5 oder 6 Kohlenstoffatomen und mehrwertigen Alkoholen hergestellt werden. Als Dicarbonsäuren kommen beispielsweise aliphatische Dicarbonsäuren wie Glutarsäure, Adipinsäure, Bernsteinsäure, Korksäure, Azelainsäure und Sebacinsäure oder aromatische Dicarbonsäuren, wie Phthalsäure, Isophthalsäure und Terephthalsäure in Betracht. Die Dicarbonsäuren können einzeln oder als Gemische, z. B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1, 2, 3 oder 4 Kohlenstoffatomen im Alkoholrest, beispielsweise Dimethylterephthalat oder Dimethyladipat, Carbonsäureanhydride, beispielsweise Bernsteinsäureanhydrid, Glutarsäureanhydrid oder Phthalsäureanhydrid, oder Carbonsäurechloride zu verwenden. Beispiele für mehrwertige Alkohole sind Glykole mit 2 bis 10, vorzugsweise 2, 3, 4, 5 oder 6 Kohlenstoffatomen, z. B. Ethylenglykol, Diethylenglykol, 1,4-Butandiol, 1,5- Pentandiol, 1,6-Hexandiol, 1,10-Decandiol, 2,2-Dimethyl-1,3-propandiol, 1,3-Propandiol, 2-Methylpropandiol, 1,3,3-Methylpentandiol-1,5 oder Dipropylenglykol. Polyesterdiole zeigen eine hohe Steifigkeit bei tiefen Temperaturen, sowie gute Verschleiß- und Abriebeigenschaften.

Das Polyol in Form eines Polyethers kann beispielsweise dadurch hergestellt werden, dass ein oder mehrere Alkylenoxide mit 2, 3 oder 4 Kohlenstoffatomen im Alkylrest mit einem Startermolekül, das zwei aktive Sauerstoffatome gebunden enthält, umgesetzt werden. Geeignete Alkylenoxide sind zum Beispiel Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid verwendet. Die Alkylenoxide können einzeln, alternierend, nacheinander oder als Mischungen eingesetzt werden. Als Startermoleküle kommen beispielsweise Wasser, Aminoalkohole, wie N-Alkyl-Diethanolamine, beispielsweise N-Methyl-diethanolamin, und Diole, wie Ethylenglycol, 1,3-Propylenglycol, 1,4-Butandiol und 1,6-Hexandiol in Betracht. Gegebenenfalls können auch Mischungen von Startermolekülen eingesetzt werden. Geeignete Polyetheralkohole sind ferner die Hydroxylgruppen-haltigen Polymerisationsprodukte des Tetrahydrofurans. Besonders bevorzugt werden Polyetherdiole auf der Basis von Ethylenoxid, Propylenoxid und/oder Hydroxylgruppen-haltige Polymerisationsprodukte des Tetrahydrofurans eingesetzt. Polyurethane auf der Basis von Polyethern zeichnen sich insbesondere durch hohe Hydrolysebeständigkeit, hohe Flexibilität und günstige Tieftemperatureigenschaften aus.

Das Polyol in Form eines Polycarbonats kann dadurch hergestellt werden, dass mindestens eine Polyolkomponente wie zum Beispiel 1,4-Butandiol, 1,5-Pentandiol, 3-Methyl-1,5-Pentandiol, 1,6-Hexandiol, 2-Methyl-1,8-oktandiol, 1,9-Nonandiol oder 1,4-Cyclohexandimethanol mit mindestens einem organischen Carbonat umgesetzt wird, zum Beispiel mit Dimethylcarbonat. Bevorzugt werden Polycarbonatdiole die auf der Basis von 1,6-Hexandiol, 1,9-Nonandiol und/oder 1,5-Pentandiol hergestellt werden. Polyurethane auf Basis von Polycarbonaten zeichnen sich in der Regel durch hohe mechanische Beständigkeit, gute mechanische Eigenschaften bei hohen Einsatztemperaturen und hervorragende Hydrolysebeständigkeit aus.

In einer bevorzugten Ausführungsform wird das erfindungsgemäß in der Polymermischung verwendete Polyurethan durch Umsetzung eines Diisocyanats mit einem Polycarbonatdiol, bevorzugt auf der Basis von 1,6-Hexandiol, insbesondere bevorzugt mit einem Molekulargewicht von 2.000 g/mol erhalten. Ein solches Polycarbonatdiol ist beispielsweise unter dem Markennamen C2201 Desmophen von der Firma Covestro, Leverkusen, Deutschland, kommerziell verfügbar. In einer spezifischen Ausführungsform wird zur Herstellung des Polyurethans als Polyolkomponente nur ein Polycarbonatdiol und kein Polyether oder Polyester verwendet.

Bei der Umsetzung zu den erfindungsgemäß verwendeten Polyurethanen können weiterhin Kettenverlängerer verwendet werden. Die Kettenverlängerer dienen zum Aufbau der Hartsegmente im Poylurethan. Vorzugsweise werden als Kettenverlängerer Diole mit Molekulargewichten von 62 g/mol bis 500 g/mol, bevorzugt von 62 g/mol bis 300 g/mol eingesetzt. Beispielsweise kommen aliphatische, cycloaliphatische und/oder araliphatische Diole mit 2 bis 14, vorzugsweise 2 bis 10 Kohlenstoffatomen, wie z. B. Ethylenglykol, 1,3-Propandiol, 1,2-Propandiol, 1,10-, o-, m-, p-Decandiol, Dihydroxycyclohexan, Diethylenglykol, Dipropylenglykol und vorzugsweise Ethylenglykol, 1,4-Butandiol, 1,6-Hexandiol und Hydrochinon-bis(2-hydroxyethyl)ether, niedermolekulare hydroxylgruppenhaltige Polyalkylenoxide auf Basis von Ethylen- und/oder 1,2-Propylenoxid und den vorgenannten Diolen, als Startermoleküle in Betracht. Es können auch Gemische der genannten Kettenverlängerer verwendet werden.

In einer bevorzugten Ausführungsform werden als Kettenverlängerer 1,6-Hexandiol oder Hydrochinon-bis(2-hydroxyethyl)ether eingesetzt. Hydroxychinon-bis(2-hydroxyethyl)ether sind als Vernetzer 30/10 von der LANXESS Deutschland GmbH, Leverkusen, Deutschland, kommerziell erhältlich.

Bei der Umsetzung zu den erfindungsgemäß verwendeten Polyurethanen können weiterhin trifunktionelle Vernetzer mit einer Funktionalität >2 eingesetzt werden. Vorteilhaft an der Verwendung von trifunktionellen Vernetzern ist, dass diese durch eine dreidimensionale Vernetzung innerhalb des Materials die mechanischen Eigenschaften, insbesondere die Zugfestigkeit und Druckverformungsrest des Materials steigen. Bevorzugt werden Triole wie 1,2,4-, 1,3,5-Trihydroxycyclohexan, Glycerin und/oder Trimethylolpropan verwendet. Die eingesetzten trifunktionellen Vernetzer können ein Molekulargewicht von 64 g/mol bis 500 g/mol, vorzugsweise von 64 g/mol bis 300 g/mol aufweisen.

Weiterhin können in geringen Mengen auch übliche monofunktionelle Verbindungen als Reaktionskomponenten, z.B. als Kettenabbrecher oder Entformungshilfen, eingesetzt werden. Beispielhaft genannt seien Alkohole, wie Octanol und Stearylalkohol, oder Amine, wie Butylamin und Stearylamin.

Die Umsetzung zu den erfindungsgemäß verwendeten Polyurethanen kann in Gegenwart von Katalysatoren, zum Beispiel tertiären Aminen und/oder organischen Metallverbindungen, die im Stand der Technik bekannt sind, erfolgen.

In einer besonders bevorzugten Ausführungsform ist das verwendete thermoplastische Polyurethan durch Umsetzung eines Methylendiphenylisocyanats, das insbesondere ausgewählt ist aus Diphenylmethandiisocyanat, Dimethylbiphenyldiisocyanat oder Phenylendiisocyanat, mit einer Polyolkomponente, die ein Polycabonatdiol ist, erhältlich.

In einer besonders bevorzugten Ausführungsform ist das verwendete thermoplastische Polyurethan durch Umsetzung von 4,4'-Diphenylmethanisocyanat mit einer Polyolkomponente basierend auf einem Polycarbonatdiol auf Basis von 1,6-Hexandiol, bevorzugt mit einem Molekulargewicht von 2.000 g/mol, und Hydrochinon-di(ß-hydroxyethyl)ether erhältlich.

Die Polymermischung kann ein Gemisch aus mehreren verschiedenen thermoplastischen Polyurethanen enthalten. Sie kann verschiedene Zusatzstoffe enthalten. Das thermoplastische Polyurethan oder Gemisch aus mehreren thermoplastischen Polyurethanen hat bevorzugt eine Shore-Härte von 80 Shore A bis 80 Shore D.

Geeignete thermoplastische Polyurethane im Sinne der vorliegenden Erfindung werden beispielsweise in der DE 10 2013 021027 A1 oder der DE 198 17 809 A1 offenbart.

Die Herstellung von thermoplastischen Polyurethanen kann durch im Stand der Technik bekannte Verfahren, wie dem sogenannten Präpolymerdosierverfahren, dem sogenannte Ester-Splitverfahren, dem sogenannten One-Shot-Dosierverfahren oder durch Herstellung in einem Reaktionsextruder erfolgen.

Die Herstellung der thermoplastischen Polyurethane kann beispielsweise mittels der in den Absätzen [0044] bis [0053] der DE 10 2013 021027 A1 offenbarten Verfahren erfolgen.

Die Polymermischung enthält mindestens ein thermoplastisches Polyketon. Thermoplastische Polyketone besitzen verschiedene, für den Dichtungsbereich vorteilhafte Eigenschaften, wie eine hohe Härte, Verschleißfestigkeit, Extrusionsfestigkeit, Medienbeständigkeit, gutes Reibungsverhalten und UV-Beständigkeit.

Solche thermoplastischen Polyketone haben im Allgemeinen eine linear alternierende Struktur und enthalten im Wesentlichen ein Molekül Kohlenmonoxid pro Molekül ungesättigtem Kohlenwasserstoff. Geeignete ethylenisch ungesättigte Kohlenwasserstoffmonomere zum Aufbau des Polyketons haben bis zu 20 Kohlenstoffatome, vorzugsweise bis zu 10 Kohlenstoffatome, und sind aliphatisch, wie beispielsweise Ethylen oder andere α-Olefine, zum Beispiel Propylen, 1-Buten, 1-Isobutylen, 1-Hexen, 1-Octen und 1-Dodecen, oder sind arylaliphatisch und enthalten einen Arylsubstituenten an einem Kohlenstoffatom der linearen Kette. Beispielhaft genannt werden für arylaliphatische Monomere Styrol, α-Methylstyrol, p-Ethylstyrol und m-Isopropylstyrol. Bevorzugte Polyketone sind Copolymere aus Kohlenmonoxid und Ethylen oder Terpolymere aus Kohlenmonoxid, Ethylen und einem zweiten ethylenisch ungesättigten Kohlenwasserstoff mit wenigstens drei Kohlenstoffatomen, insbesondere ein α-Olefin, wie z.B. Propylen.

Besonders bevorzugt im Rahmen der vorliegenden Erfindung sind Terpolymere, insbesondere Terpolymere, die durch Umsetzung der Monomere Ethylen und Propylen mit Kohlenmonoxid erhältlich sind. Vorzugsweise werden von dem zweiten Kohlenwasserstoff ungefähr 10 bis 100 Monomereinheiten eingesetzt.

Die Polymerkette des bevorzugten Polyketonpolymers wird durch die Formel: [CO(CH₂CH₂)]x [CO(G)]y dargestellt,
wobei G eine Monomereinheit auf Basis eines ethylenisch ungesättigten Kohlenwasserstoffs mit wenigstens 3 Kohlenstoffatomen, vorzugsweise 3 bis 10 C-Atomen, welche aufgrund der ethylenischen Doppelbindung polymerisiert ist, y und x jeweils größer als 0 sind, und
das Verhältnis y:x nicht mehr als ungefähr 0,5 ist. Beispielsweise beträgt das Verhältnis von y:x zwischen 0,01 bis 0,1.

Polyketone mit einem mittleren Molekulargewicht von ungefähr 1.000 bis 200.000, insbesondere 20.000 bis 90.000, bestimmt durch Gelpermeationschromatographie, sind bevorzugt.

Im Rahmen dieser Erfindung besonders bevorzugte Polyketone sind beispielsweise unter der Markenbezeichnung Akrotek PKVM, Akrotek PK HM oder Akrotek PK HMT von der Firma AKRO-PLASTIC GmbH, Niederzissen, Deutschland kommerziell verfügbar.

In der erfindungsgemäß verwendeten Polymermischung können ein Polyketon oder mehrere verschiedene Polyketone enthalten sein.

In einer spezifischen Ausführungsform betrifft die Erfindung einen Dichtungsring enthaltend eine Polymermischung beinhaltend mindestens ein thermoplastisches Polyketon und mindestens ein thermoplastisches Polyurethan, wobei das Polyurethan durch Umsetzung von 4,4'-Diphenylmethandiisocyanat mit einer Polyolkomponente basierend auf einem Polycarbonatdiol auf Basis vom 1,6 -Hexandiol, bevorzugt mit einem Molekulargewicht von 2000 g/mol und dem Vernetzer Hydrochinon-di(β-hydroxyethyl)ether, oder durch Umsetzung von 3,3'-Dimethyl-4,4'-biphenyldiisocyanat mit einem Polyolgemisch enthaltend ein Polycarbonatpolyol, ein Polyetherpolyol und ein Polyesterpolyol, jeweils mit einem Molekulargewicht von 2000 g/mol, und 1,4-Butandiol als Kettenverlängerer erhältlich ist.

In einer bevorzugten Ausführungsform betrifft die Erfindung Dichtungselemente enthaltend eine Polymermischung, die mindestens ein thermoplastisches Polyurethan enthält, das durch Umsetzung eines Methylendiphenylisocyanats, ausgewählt aus Diphenylmethandiisocyanat, Dimethylbiphenyldiisocyanat oder Phenylendiisocyanat, mit einer Polyolkomponente, die ein Polycabonatdiol ist, erhältlich ist. In dieser Ausführungsform enthält die Polymermischung neben dem durch Umsetzung der genannten Methylendiphenylisocyanate mit einem Polycarbonatdiol erhältlichen thermoplastischen Polyurethan bevorzugt ein Polyketon-Terpolymer, das bevorzugt durch eine Polymerisationsreaktion unter Verwendung der Monomere Ethylen und Propylen erhältlich ist. In einer spezifischen Ausführungsform enthält das erfindungsgemäße Dichtungselement eine Polymermischung, enthaltend ein Polyurethan, das durch Umsetzung eines Diphenylmethandiisocyanats, bevorzugt 4,4'-Diphenylmethandiisocyanat, mit einem Polycabonatdiol erhältlich ist und ein Polyketon-Terpolymer, das durch eine Polymerisationsreaktion unter Verwendung der Monomere Ethylen und Propylen erhältlich ist. In der zuvor genannten bevorzugten und spezifischen Ausführungsform ist das Polycarbonatdiol bevorzugt ein Polycarbonatdiol auf Basis von 1,6-Hexandiol.

Überraschenderweise wurde gefunden, dass die erfindungsgemäßen Dichtungselemente enthaltend die zuvor beschriebenen Polymermischungen, verbesserte Dehnungseigenschaften bei hoher mechanischer Stabilität aufweisen. Insbesondere können die erfindungsgemäßen Dichtungselemente eine erhöhte Streckdehnung sowie ein erniedrigter Elastizitätsmodul bei einer erhöhten Bruchdehnung im Vergleich zu Dichtungselementen aus reinem Polyketon aufweisen. Die erfindungsgemäßen Dichtungselemente besitzen somit durch die verbesserten Dehnungseigenschaften eine verbesserte Montagefähigkeit bei gleichzeitig erhöhter Stabilität.

Neben den genannten Polyketonen und Polyurethanen kann die Polymermischung weitere Zusatzstoffe, wie Stabilisatoren, Verarbeitungshilfsmittel, Fließhilfsmittel, Antistatika, Flammschutzmittel, Farbstoffe, Pigmente, Verstärkungsstoffe, wie z.B. Glasfasern, Kohlefasern oder mineralische Füllstoffe, handelsübliche Weichmacher, wie Phosphate, Phthalate, Adipate, Sebecate und Alkylsulfonsäureester, reibungsreduzierende Zusätze (wie PTFE, Molybdändisulfid), Gleit- und Entformungsmittel oder andere übliche Additive enthalten. Die Verwendung von Zusatzstoffen ist vorteilhaft, da sie der Polymermischung zusätzliche Eigenschaften verleiht. Dies kann zum Beispiel eine bessere Verarbeitbarkeit oder eine verbesserte Stabilität sein.

In einer bestimmten Ausführungsform enthält das erfindungsgemäß verwendete Polymergemisch und/oder die erfindungsgemäßen Dichtungselemente keine verstärkenden Zusätze wie mineralische Füllstoffe oder Faserstoffe, insbesondere keine Glasfasern.

Bevorzugt beträgt der Anteil des Polyurethans an der Polymermischung von 3 bis 50 Gew.-%, bevorzugt von 3 bis 20 Gew.-%, und der Anteil des Polyketons entsprechend von 97 bis 50 Gew.-%, bevorzugt von 97 bis 80 Gew.-%, jeweils bezogen auf das Gesamtgewicht der Polymermischung.

In spezifischen Ausführungsformen kann der Anteil des Polyurethans an der Polymermischung von 5 bis 20 Gew.-%, von 10 bis 20 Gew.-%, von 5 bis 10 Gew.-%, von 10 bis 15 Gew.-%, von 15 bis 20 Gew.-% oder von 20 bis 25 Gew.-% betragen. Bevorzugt beträgt der Anteil des Polyurethans an der Polymermischung 10 bis 25 Gew.-%.

Neben Polyurethan und Polyketon kann die Polymermischung Zusatzstoffe in einem Anteil von bis zu 10 Gew.-% enthalten.

Die erfindungsgemäß verwendeten Polymermischungen von thermoplastischen Polyketonen mit thermoplastischen Polyurethanen weisen im genannten Mischungsbereich überraschenderweise keine signifikanten Unterschiede bei den thermischen Eigenschaften im Vergleich zu reinem Polyketon und im Vergleich der verschiedenen Mischungen untereinander auf. Die Mischungen sind homogen. In den erfindungsgemäß verwendeten Mischungen sind die Bereiche des Aufschmelzens, der Gefügeveränderung und der Glasübergangstemperatur praktisch unverändert gegenüber dem reinen Polyketon.

Vorteilhafterweise können somit Polyketon und Polyurethan in verschiedenen Mischungsanteilen zur Modulation der mechanischen Eigenschaften verwendet werden, ohne die thermischen Eigenschaften des Materials zu beeinflussen oder strukturelle Veränderungen im Material herbeizuführen.

Eine leicht geringere Härte der erfindungsgemäßen Polymermischungen gegenüber reinen Polyketonen kann für Dichtungsanwendungen vernachlässigt werden, da die absolute Härte der Polymermischung im Vergleich zu üblichen anderen Elastomeren auch bei relativ hohem TPU-Anteil sehr hoch sind. Die im Vergleich mit Elastomeren oder PTFE deutlich höheren Festigkeiten des Polyketons und der beschriebenen Polymermischungen werden in den standardisierten Anwendungen in der Regel nicht voll ausgeschöpft.

Die erfindungsgemäß verwendeten Polyketone und Polyurethane lassen sich in den jeweiligen Bestandteilen in bekannter Weise vermischen und bei Temperaturen von 200°C bis 330°C in auf dem Gebiet der Kunststoffverarbeitung bekannten Geräten wie Innenknetern, Extrudern oder Doppelwellenschnecken zur Herstellung der Polymermischung schmelzcompoundieren oder schmelzextrudieren.

Die Dichtungselemente der vorliegenden Erfindung weisen eine Ringform auf, d.h. sie sind Dichtungsringe. Die Dichtungselemente können statische oder dynamische Dichtungen sein.

Die Dichtungselemente können mittels Spritzgussverfahren, insbesondere unter Verwendung von Punkt- oder Tunnel-Anschnitt hergestellt werden. Die Verwendung eines Spritzgußverfahrens ist besonders vorteilhaft, da dieses eine kostengünstige Herstellung von rotationssymmetrischen Formkörpern ermöglicht.

Beim Punkt- oder Tunnel-Anschnitt wird die Polymermischung in die Kavität des Formwerkzeuges durch einen oder mehrere seitlich angeordnete Einlasse, sogenannte Anspritzstellen, gefüllt. Bei rotationssymmetrischen, insbesondere ringförmigen Formen kann die Polymermischung von der Eintrittsstelle aus in zwei Richtungen der kreisförmigen Kavität fließen. Die beiden Fronten treffen an einer Zusammenflussstelle zusammen, welche in der Regel gegenüber der Anspritzstelle liegt. An der Zusammenflussstelle kann hierbei in den Dichtungselementen eine Bindenaht entstehen. An der Zusammenflussstelle kann es wegen der Ausbildung einer Bindenaht zu einer Schwächung der mechanischen Stabilität des Dichtungselements kommen.

Überraschenderweise wurde jedoch gefunden, dass die Verwendung von Polymergemischen, die ein thermoplastisches Polyurethan, das durch die Umsetzung von 4,4'-Diphenylmethanisocyanat mit einem Polycarbonatdiol erhältlich ist, nicht nur eine vergrößerte Streckdehnung und eine Verringerung des Elastizitätsmoduls, also eine Erhöhung der Elastizität, bewirkt, sondern auch eine stark erhöhte Bruchdehnung. Eine Schwächung der Stabilität des Dichtungselements an der Zusammenflussstelle durch eine Bindenaht ist bei diesem Polymergemisch nicht zu beobachten. Somit wird vorteilhafterweise die Montagefähigkeit der Dichtungen bei gleichzeitig erhöhter Stabilität verbessert.

In einer bevorzugten Ausführungsform der erfindungsgemäßen Dichtungselemente enthalten diese daher keine Bindenaht. In einer alternativ bevorzugten Ausführungsform können die Dichtungselemente eine Bindenaht enthalten, die aber im Vergleich zum Material außerhalb der Bindenaht keine oder eine nur unwesentlich verringerte Stabilität aufweist.

Die Herstellung der Dichtungselemente kann mit auf dem Gebiet der Kunststoffverarbeitung üblichen Spritzgussmaschinen erfolgen. Hierbei sind die Empfehlungen der Maschinenhersteller betreffend Verfahrensparameter, insbesondere Temperaturen an den verschiedenen Teilen der Anlage, wie Leitungen und Formwerkzeugen, zu beachten.

Ein großer Vorteil der verwendeten Polymermischungen besteht daher auch darin, dass eine Verringerung der Stabilität von Dichtungselementen an einer Bindenaht verhindert werden kann, ohne eine Veränderung des Spritzgussverfahrens oder der verwendeten Maschinen vornehmen zu müssen.

In einem weiteren Aspekt betrifft die Erfindung die Verwendung der offenbarten Polymergemische, die mindestens ein thermoplastisches Polyketon und mindestens ein thermoplastisches Polyurethan enthalten, zur Herstellung von Dichtungsringen. Bevorzugt werden die Dichtungsringe in einem Spritzgussverfahren hergestellt. In einer besonders bevorzugten Ausführungsform wird ein Spritzgussverfahren verwendet, bei dem sich eine Zusammenflussstelle der Polymermischung bildet, wie beispielsweise beim Punkt- oder Tunnel-Anschnitt. In dieser Ausführungsform enthält das verwendete Polymergemsich bevorzugt ein Polyurethan, das durch die Umsetzung eines Diphenylmethanisocyanats erhältlich ist.

Gegenstand der Erfindung ist auch ein Verfahren zur Herstellung von Dichtungsringen, beinhaltend die Schritte:
a) Bereitstellen einer Polymermischung, enthaltend mindestens ein thermoplastisches Polyketon und mindestens ein thermoplastisches Polyurethan, wie oben beschrieben, und
b) Formen der Polymermischung zu einem Dichtungsring.

In einer bevorzugten Ausführungsform erfolgt Schritt b) in einem Spritzgussverfahren, bei dem sich eine Zusammenflussstelle der Polymermischung bildet, insbesondere ein Spritzgussverfahren unter Verwendung eines Punkt- oder Tunnel-Anschnitts. Weiterhin kann das Verfahren einen Schritt c) enthalten, bei dem eine Anguss-Geometrie von dem Dichtungselement getrennt wird.

In einem weiteren Aspekt betrifft die Erfindung Dichtungsringe, welche nach dem erfindungsgemäßen Verfahren erhältlich sind.

Beschrieben werden ebenso Dichtungselemente enthaltend die vorhergehend beschriebene Polymermischung, die mittels eines Verfahrens, bei dem sich eine Zusammenflussstelle bildet, erhältlich sind oder erhalten wurden. Die Dichtungselemente können eine am Umfang oder der Stirnfläche angeordnete Anspritzstelle aufweisen.

Weiterhin wird die Verwendung von thermoplastischen Polyurethanen zur Erhöhung der mechanischen Stabilität, insbesondere der Bruchdehnung von Dichtungselementen, insbesondere von ringförmigen Dichtungen, beschrieben, wobei die Dichtungselemente thermoplastische Polyketone enthalten. Bevorzugt betrifft die Stabilisierung die Zugfestigkeit der Dichtungselemente. Insbesondere wird die Bindenaht von ringförmigen Dichtungen stabilisiert oder gänzlich vermieden.

Weiterhin wird die Verwendung der im Vorhergehenden offenbarten thermoplastischen Polyurethane zur Erhöhung der Streckdehnung von Dichtungselementen, insbesondere ringförmigen Dichtungen, enthaltend thermoplastische Polyketone, beschrieben.

Weiterhin wird die Verwendung der im Vorhergehenden offenbarten thermoplastischen Polyurethane zur Verringerung des Elastizitätsmoduls von Dichtungselementen, insbesondere ringförmige Dichtungen, enthaltend thermoplastische Polyketone, beschrieben.

Es ist bevorzugt, dass bei den genannten Verwendungen sowohl die Bruchdehnung als auch die Streckdehnung erhöht und der Elastizitätsmodul erniedrigt werden.

Die erfindungsgemäßen Dichtungselemente, Verfahren zur Herstellung sowie die erfindungsgemäße Verwendung lösen die der Erfindung zugrundeliegende Aufgabe. Insgesamt weisen die Dichtungselemente eine vorteilhafte Kombination von mechanischen Eigenschaften auf. Durch die Beimischung mindestens eines thermoplastischen Polyurethans zu einem thermoplastischen Polyketon können die Dehnungseigenschaften, wie Bruchdehnung und Streckdehnung, verbessert und der Elastizitätsmodul erniedrigt werden. Überraschenderweise können somit die für Polyketone vorteilhafte Eigenschaft einer großen Härte und Stabilität mit der scheinbar gegenläufigen Eigenschaft der erhöhten Elastizität kombiniert werden.

Weiterhin wird bei den erfindungsgemäßen ringförmigen Dichtungen eine Schwächung des Dichtungselements an der Zusammenflussstelle und einer daraus resultierenden Bindenaht vermieden. Somit kann eine, auch im Vergleich mit herkömmlichen Dichtungen aus reinem Polyketon, überraschend hohe Bruchstabilität erzielt werden.

Die erfindungsgemäßen Dichtungen weisen daher eine auf vorteilhafte und unerwartete Weise erhöhte Stabilität bei gleichzeitig verbesserter Montagefähigkeit auf.

Es ist weiterhin ein Vorteil der Erfindung, dass die Dichtungselemente mit verbesserten Eigenschaften mittels herkömmlicher Spritzgussverfahren hergestellt werden können, ohne dass an den entsprechenden Verfahren oder Maschinen signifikante Änderungen vorgenommen werden müssen.

Es ist weiterhin von Vorteil, dass für die Erfindung allgemein kommerziell erhältliche Verbindungen und Zusammensetzungen verwendet werden können.

### Figur 1 :

Dynamische Differenzkalorimetrie von Polyketon (Kurven 4; - = 10,4 mg, - - - = 11,4 mg) Granulat, Proben von spritzgegossenen Simko300 Gleitringen aus Polyketon (Kurve 5) und Granulat aus Mischung aus TPU basierend auf TODI und PK mit einem TPU Anteil von 5 Gew.-% TPU (Kurven 1; - = 14,2 mg, - - - = 20,9 mg), 10 Gew.-% TPU (Kurven 2; - = 14,9 mg, - - - = 15 mg) und 20 Gew.-% TPU (Kurven 3; - = 11,1 mg, - - - = 17 mg).

### Figur 2:

Dynamische Differenzkalorimetrie von Proben aus Gleitringen bestehend aus Polyketon (Kurve 1)) oder Mischung aus TPU basierend auf MDI und PK mit einem TPU Anteil von 10 Gew.-% (Kurve 2) und 25 Gew.-% (Kurve 3)).

### Ausführungsbeispiele

### Beispiel 1 (Vergleich): Herstellung von Dichtungsringen aus Polvketon (PK)

Polyketon (PK) der Marke Akroteck PK VM (Akro-Plastic GmbH, Niederzissen, Deutschland) Granulat wurde in einem Spritzgussverfahren zu Simko 300 Gleitringen verarbeitet.

### Beispiel 2: Herstellung von Dichtungsringen aus Polyketon (PK) und TPU basierend auf TODI (PK + TODI)

Die Herstellung des auf TODI basierenden thermoplastischen Polyurethans (TPU) erfolgte nach dem in den Absätzen [0051] bis [0053] der DE 10 2013 021027 A1 offenbarten Verfahren. Hierzu wurden als Rohstoffe Desmophen C 2201 (Polycarbonatpolyol mit einem Molekulargewicht von 2000 g/mol, Covestro, Leverkusen, Deutschland), Terathane 2000 (Polyetherpolyol mit einem Molekulargewicht von 2000 g/mol, Sigma-Aldrich Chemie GmbH, Taufkirchen, Germany), Capa 2200 (Polyesterpolyol mit einem Molekulargewicht von 2000 g/mol, Perstorp Holding AB, Malmö, Schweden), TODI (3,3'-Dimethyl-4,4'-Biphenyldiisocyanat, Sigma-Aldrich Chemie GmbH, Taufkirchen, Germany) und 1,4-Butandiol verwendet.

Die Polyole wurden in einem Reaktionsgefäß bei 135°C aufgeschmolzen und unter Rühren vorgemischt. Nach dem Mischen der Polyole wurde die Gesamtmenge Isocyanat zugegeben. Nach 15 Minuten Reaktionszeit wurde das 1,4-Butandiol zugegeben und die gesamte Mischung 30 s lang intensiv gerührt. Das fertige TPU wurde in Platten auf einen auf 130°C temperierten Heiztisch gegossen und dort für 10 Minuten ausgehärtet. Die fertigen TPU-Platten werden anschließend in einem Heißluftofen für 12 h bei 110°C nachgetempert und danach granuliert.

Das TPU Granulat wurde zu Anteilen von 5, 10 und 20 Gew.-% mit einem Polyketon (PK) der Marke Akrotech PK VM (Akro-Plastic GmbH, Niederzissen, Deutschland) compoundiert und granuliert.

Die Polymermischung wurde in einem Spritzgussverfahren zu Simko 300 Gleitringen verarbeitet.

### Beispiel 3: Herstellung von Dichtungsringen aus Polyketon (PK) und TPU basierend auf MDI (PK + MDI)

Analog zur Herstellung von thermoplastischem Polyurethan basierend auf TODI aus Beispiel 2 wurde gemäß dem in der DE 10 2013 021027 A1 offenbarten Verfahren ein thermoplastisches Urethan basierend 4,4'-Diphenylmethandiisocyanat (MDI) an Stelle von TODI hergestellt. Hierzu wurde 4,4'-Diphenylmethandiisocyanat (Marke Desmodur 44M ,Covestro, Leverkusen, Deutschland) mit einer Polyolkomponente basierend auf einem Polycarbonatdiol auf Basis von 1,6-Hexandiol (Marke Desmophen C 2201, Covestro, Leverkusen, Deutschland) mit einem Molekulargewicht von 2.000 g/mol sowie Hydrochinon-di(β-hydroxyethyl)ether (Vernetzer 30/10, LANXESS Deutschland GmbH, Leverkusen, Deutschland) umgesetzt.

Das TPU Granulat wurde analog zu Beispiel 2 zu Anteilen von 10 und 25 Gew.-% mit einem Polyketon (PK) der Marke Akrotech PK VM (Akro-Plastic GmbH, Niederzissen, Deutschland) compoundiert, granuliert und anschließend in einem Spritzgußverfahren zu Simko 300 Gleitringen verarbeitet.

### Beispiel 4: DSC-Messung

### 4.1 Polymermischungen enthaltend TPU basierend auf TODI

Die thermischen Eigenschaften der gemäß Beispiel 2 erhaltenen Granulate enthaltend eine Mischung aus TPU basierend auf TODI und PK mit einem TPU Anteil von 5, 10 und 20 Gew.-% (Proben: PK + 5% TPU (TODI); PK + 10% TPU (TODI); PK + 20% TPU (TODI)) wurde mittels dynamischer Differenzkalorimetrie analysiert. Zum Vergleich wurden Proben des PK Granulats (Probe "PK") sowie des Materials der im Spritzgußverfahren hergestellten Simko 300 Gleitringe (Probe "PK Simko300") aus Beispiel 1 ebenfalls untersucht.

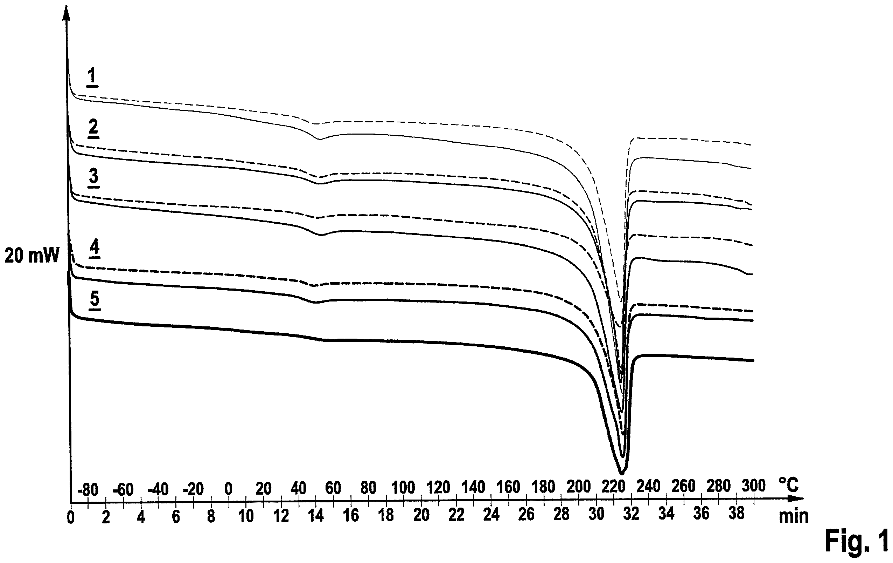

Die Ergebnisse der DSC-Messungen sind in Fig. 1 dargestellt. Wie aus Fig. 1 ersichtlich ist, besitzen die Polymergemische enthaltend 5, 10 und 20 Gew.-% TODI TPU praktisch unveränderte thermische Eigenschaften bezüglich der Bereiche des Aufschmelzens, der Gefügeveränderung und des Glasübergangs gegenüber dem Material aus reinem PK-Grundmaterial. Die beiden Polymere zeigen also ein homogenes Mischungsverhalten im gesamten Mischungsbereich ohne strukturelle Änderungen der Polymermischung oder Entmischungseffekte. Somit kann das Mischungsverhältnis der Polymere den erwünschten Eigenschaften des Materials angepasst werden.

### 4.2 Polymermischungen enthaltend TPU basierend auf MDI

Die thermischen Eigenschaften der Materialien der gemäß Beispiel 3 durch Spritzgußverfahrenen erhaltenen Gleitringe, enthaltend eine Mischung aus TPU basierend auf MDI und PK mit einem TPU Anteil von 10 und 25 Gew.-% (Proben "PK + 10% MDI" und "PK + 25% MDI"), wurden wie unter 4.1 beschrieben mittels dynamischer Differenzkalorimetrie analysiert. Zum Vergleich wurde Material aus Gleitringen enthaltend das reine PK (Probe "PK") untersucht.

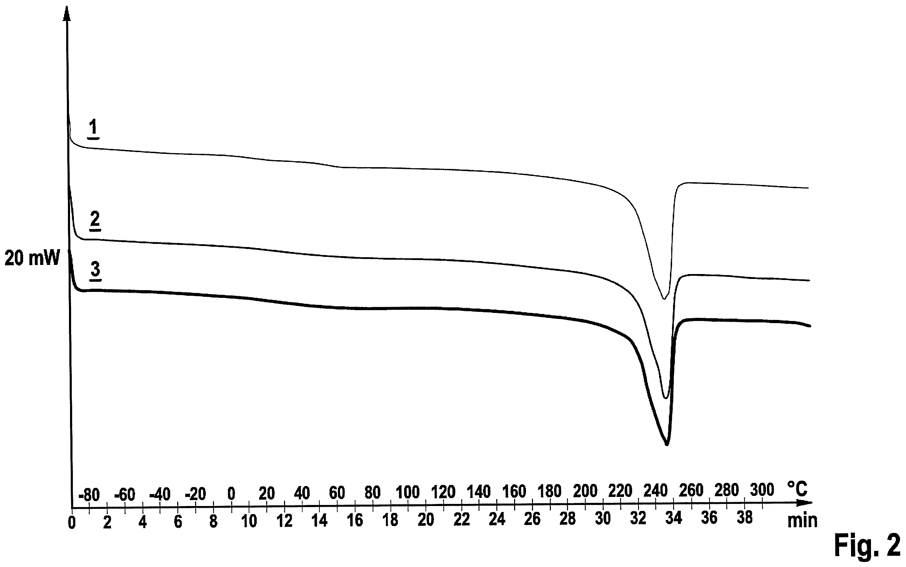

Die Ergebnisse der DSC-Messungen sind in Fig. 2 dargestellt. Wie aus Fig. 2 ersichtlich ist, besitzen die Polymergemische enthaltend 10 und 25 Gew.-% MDI TPU, wie das unter 4.1 untersuchte Material, praktisch unveränderte thermische Eigenschaften bezüglich der Bereiche des Aufschmelzens, der Gefügeveränderung und des Glasübergangs gegenüber dem Material aus reinem PK-Grundmaterial. Die beiden Polymere zeigen ein homogenes Mischungsverhalten im gesamten Mischungsbereich ohne strukturelle Änderungen der Polymermischung. Somit kann das Mischungsverhältnis der Polymere den erwünschten Eigenschaften des Materials angepasst werden.

### Beispiel 5: Physikalisch-mechanische Eigenschaften

### 5.1 Polymer enthaltend TPU auf Basis von TODI

Die mechanische Stabilität der gemäß den Beispielen 1 und 2 hergestellten Dichtungsringe, enthaltend reines Polyketon (PK) und Polymermischungen aus PK mit 5, 10 und 20 Gew.-% TODI basiertem TPU (PK + 5% TPU (TODI); PK + 10% TPU (TODI); PK + 20% TPU (TODI)), wurde in einem Zugversuch mit den entsprechenden Dichtungsringen untersucht. Die Ergebnisse der Versuche sind in Tabelle 1 dargestellt.

**Tabelle 1: Dehnungseigenschaften PK + TPU (TODI):**

| Material | Tangens-Winkel | Fₘₐₓ in N (Durchschn.) | Streckdehnung Standardweg mm | Bruchdehnung Standardweg mm |
|---|---|---|---|---|
| PK | 71° | 1382 | 48 | 64 |
| PK+ 5% | 68,5° | 1318 | 53 | 60-66 |
| TPU (TODI) | | | | |
| PK+ 10% TPU (TODI) | 58° | 866 | 42 (Bindenahteffekt) | 42 (Bindenahteffekt) |
| PK+ 20% TPU (TODI) | nicht mehr sinnvoll messbar wegen Zerstörung (Bindenahteffekt) | nicht mehr sinnvoll messbar wegen Zerstörung (Bindenahteffekt) | nicht mehr sinnvoll messbar wegen Zerstörung (Bindenahteffekt) | nicht mehr sinnvoll messbar wegen Zerstörung (Bindenahteffekt) |

Die Werte der Tabelle 1 wurden aus den aufgenommenen Kraft-Weg-Kurven ermittelt. Wie aus Tabelle 1 ersichtlich ist, verbessert sich durch Zugabe von 5% TODI basiertem TPU die Streckdehnung (hier Streckweg) von ca. 48 mm auf ca. 53 im Vergleich mit reinem PK. Die maximale Kraft verringerte sich hierbei von ca. 1400 N auf akzeptable ca. 1300 N.

Als Maß der Elastizität ergibt sich der Elastizitätsmodul qualitativ aus der Veränderung des Tangens-Winkels T an dem frühen elastischen Bereich der Spannungs-Dehnungs-Kurve. Je geringer der Winkel, umso geringer auch der Elastizitätsmodul. Bereits durch Zugabe von 5 Gew.-% TODI basiertem TPU wurde der Elastizitätsmodul des Materials verringert, d.h. die Elastizität erhöht. Diese erhöhte Elastizität spiegelt sich auch im verlängerten Weg der Streckdehnung.

Somit konnte durch Zugabe von 5 Gew.-% TODI basiertem TPU die Elastizität von PK enthaltenden Dichtungsringen unter Beibehalt einer akzeptablen Maximalkraft erhöht werden. Die erhöhte Elastizität führt zu verbesserten Montageeigenschaften der Dichtungen.

Die Zugabe von 10 Gew.-% und 20 Gew.-% TODI basiertem TPU führte zu einer Verringerung der Bruchdehnung, wobei der Bruch bei allen getesteten Dichtungsringen, welche TPU auf Basis von TODI enthielten, an der Bindenaht auftrat. Eine Zuganalyse von Teilstücken, welche keine Bindenaht enthielten, zeigte, dass die Festigkeit des Materials bei steigendem TPU Gehalt kaum beeinflusst wurde. Die Reduzierung der Bruchdehnung ist somit auf einen Bindenahteffekt zurückzuführen.

### 5.2 Polymer enthaltend TPU auf Basis von MDI

Die mechanische Stabilität der gemäß Beispiel 1 und 3 hergestellten Dichtungsringe, enthaltend reines Polyketon (PK) und Polymermischungen aus PK mit 10 und 25 Gew.-% MDI basiertem TPU (PK + 10% TPU (MDI); PK + 25% TPU (MDI)), wurde analog zu Beispiel 5.1 im Zugversuch untersucht. Die Ergebnisse sind in Tabelle 2 dargestellt.

**Tabelle 2: Dehnungseigenschaften PK + TPU (MDI)**

| Material | Tangens-Winkel | Fₘₐₓ in N (Durchschn.) | Streckdehnung Standardweg mm | Bruchdehnung Standardweg mm |
|---|---|---|---|---|
| PK | 80° | 1400 | 51 | 62 |
| PK+ 10% TPU (MDI) | 75° | 1250 | 53 | 155 |
| PK + 25% TPU (MDI) | 72° | 1110 | 56 | >120 |

Die Werte der Tabelle 2 wurden aus den aufgenommenen Kraft-Weg-Kurven ermittelt. Wie aus Tabelle 2 ersichtlich ist, führt die Zugabe von TPU basierend auf MDI zu einer Verringerung des Elastizitätsmoduls, charakterisiert durch den Tangenswinkel, und einer Verlängerung des Weges der Streckdehnung. Folglich wurde die Elastizität der Dichtungsringe durch die Zugabe von TPU basierend auf MDI signifikant verbessert, bei einer lediglich geringen Abnahme der Maximalkraft.

Weiterhin wurde überraschenderweise auch der Weg der Bruchdehnung bei Dichtungsringen enthaltend TPU basierend auf MDI gegenüber PK signifikant vergrößert. Eine Verringerung der Bruchstabilität aufgrund einer Bindenaht wird also durch die Verwendung von TPU basierend auf MDI vermieden.

Sowohl die erhöhte Streckdehnung als auch die deutlich erhöhte Bruchdehnung und der niedrigere Elastizitätsmodul führen zu einer verbesserten Montagefähigkeit der untersuchten Dichtungsringe. Insbesondere durch die Zugabe von MDI basiertem TPU kann die für Polyketone charakteristische Eigenschaft einer großen Härte und Stabilität mit der scheinbar gegenläufigen Eigenschaft der erhöhten Elastizität kombiniert werden.

## Patentansprüche

1. Dichtungsring enthaltend eine Polymermischung, die mindestens ein thermoplastisches Polyketon und mindestens ein thermoplastisches Polyurethan enthält.

2. Dichtungsring gemäß Anspruch 1, wobei das thermoplastische Polyurethan durch Umsetzung eines aromatischen Diisocyanats erhältlich ist.

3. Dichtungsring gemäß mindestens einem der vorhergehenden Ansprüche, wobei das thermoplastische Polyurethan durch Umsetzung eines Diphenylmethandiisocyanats, Dimethylbiphenyldiisocyanats oder Phenylendiisocyanats erhältlich ist.

4. Dichtungsring gemäß mindestens einem der vorhergehenden Ansprüche, wobei das thermoplastische Polyurethan durch Umsetzung mindestens eines Polyols, das ein Polycarbonat, Polyester oder Polyether ist, erhältlich ist.

5. Dichtungsring gemäß mindestens einem der vorhergehenden Ansprüche, wobei das thermoplastische Polyketon ein Terpolymer ist, das bevorzugt durch eine Polymerisationsreaktion unter Verwendung der Monomere Ethylen und Propylen erhältlich ist.

6. Dichtungsring gemäß mindestens einem der vorhergehenden Ansprüche, wobei das thermoplastische Polyurethan durch Umsetzung eines Methylendiphenylisocyanats, ausgewählt aus Diphenylmethandiisocyanat, Dimethylbiphenyldiisocyanat oder Phenylendiisocyanat, mit einer Polyolkomponente, die ein Polycarbonatdiol ist, erhältlich ist.

7. Dichtungsring gemäß mindestens einem der vorhergehenden Ansprüche, wobei das thermoplastische Polyurethan durch Umsetzung von 4,4'-Diphenylmethandiisocyanat mit einer Polyolkomponente, welche ein Polycarbonatdiol auf Basis vom 1,6-Hexandiol ist, bevorzugt mit einem Molekulargewicht von 2000 g/mol, und Hydrochinon-di(β-hydroxyethyl)ether erhältlich ist.

8. Dichtungsring gemäß mindestens einem der Ansprüche 1 bis 6, wobei das thermoplastische Polyurethan durch Umsetzung von 3,3'-Dimethyl-4,4'-biphenyldiisocyanat mit einem Polyolgemisch enthaltend ein Polycarbonatpolyol, ein Polyetherpolyol und ein Polyesterpolyol, jeweils mit einem Molekulargewicht von 2.000 g/mol, und 1,4-Butandiol als Kettenverlängerer erhältlich ist.

9. Dichtungsring gemäß mindestens einem der vorhergehenden Ansprüche, wobei der Anteil des Polyurethans an der Polymermischung von 3 bis 50 Gew.-% und der Anteil des Polyketons von 50 bis 97 Gew.-% beträgt.

10. Dichtungsring gemäß mindestens einem der vorhergehenden Ansprüche, wobei der Dichtungsring mittels eines Verfahrens, bei dem sich eine Zusammenflussstelle bildet, erhältlich ist.

11. Verwendung der Polymermischung gemäß mindestens einem der Ansprüche 1 bis 9 zur Herstellung von Dichtungsringen, wobei der Dichtungsring bevorzugt in einem Spritzgußverfahren hergestellt wird.

12. Verfahren zur Herstellung von Dichtungsringen, beinhaltend die Schritte:
a) Bereitstellen einer Polymermischung gemäß einem der Ansprüche 1 bis 9,
b) Formen der Polymermischung zu einem Dichtungsring.

13. Verfahren zur Herstellung von Dichtungsringen gemäß Anspruch 12, wobei Schritt b) in einem Spritzgußverfahren erfolgt, bei dem sich eine Zusammenflussstelle der Polymermischung bildet.

14. Dichtungsring erhältlich nach dem Verfahren gemäß Anspruch 12 oder 13.

## Claims

1. Sealing ring comprising a polymer mixture which comprises at least one thermoplastic polyketone and at least one thermoplastic polyurethane.

2. Sealing ring according to Claim 1, the thermoplastic polyurethane being obtainable via reaction of an aromatic diisocyanate.

3. Sealing ring according to at least one of the preceding claims, the thermoplastic polyurethane being obtainable via reaction of a diphenylmethane diisocyanate, dimethylbiphenyl diisocyanate or phenylene diisocyanate.

4. Sealing ring according to at least one of the preceding claims, the thermoplastic polyurethane being obtainable via reaction of at least one polyol which is a polycarbonate, polyester or polyether.

5. Sealing ring according to at least one of the preceding claims, the thermoplastic polyketone being a terpolymer which is preferably obtainable via a polymerization reaction with use of the monomers ethylene and propylene.

6. Sealing ring according to at least one of the preceding claims, the thermoplastic polyurethane being obtainable via reaction of a methylenediphenyl isocyanate, selected from diphenylmethane diisocyanate, dimethylbiphenyl diisocyanate or phenylene diisocyanate, with a polyol component which is a polycarbonatediol.

7. Sealing ring according to at least one of the preceding claims, the thermoplastic polyurethane being obtainable via reaction of diphenylmethane 4,4'-diisocyanate with a polyol component which is a polycarbonatediol based on 1,6-hexanediol, preferably with a molar mass of 2000 g/mol, and hydroquinone di(β-hydroxyethyl) ether.

8. Sealing ring according to at least one of Claims 1 to 6, the thermoplastic polyurethane being obtainable via reaction of 3,3'-dimethylbiphenyl 4,4'-diisocyanate with a polyol mixture comprising a polycarbonate polyol, a polyether polyol and a polyester polyol, respectively with a molar mass of 2000 g/mol, and 1,4-butanediol as chain extender.

9. Sealing ring according to at least one of the preceding claims, where the proportion of the polyurethane in the polymer mixture is from 3 to 50% by weight and the proportion of the polyketone is from 50 to 97% by weight.

10. Sealing ring according to at least one of the preceding claims, where the sealing ring is obtainable by a process in which a confluence site arises.

11. Use of the polymer mixture according to at least one of Claims 1 to 9 for the production of sealing rings, the sealing ring being preferably produced in an injection-moulding process.

12. Process for the production of sealing rings, comprising the steps of:
a) provision of a polymer mixture according to any of Claims 1 to 9,
b) moulding of the polymer mixture to give a sealing ring.

13. Process for the production of sealing rings according to Claim 12, step b) taking place in an injection-moulding process in which a confluence site of the polymer mixture arises.

14. Sealing ring obtainable by the process according to Claim 12 or 13.

## Revendications

1. Joint d'étanchéité contenant un mélange de polymères qui contient au moins une polycétone thermoplastique et au moins un polyuréthane thermoplastique.

2. Joint d'étanchéité selon la revendication 1, le polyuréthane thermoplastique pouvant être obtenu par transformation d'un diisocyanate aromatique.

3. Joint d'étanchéité selon au moins l'une quelconque des revendications précédentes, le polyuréthane thermoplastique pouvant être obtenu par transformation d'un diisocyanate de diphénylméthane, d'un diisocyanate de diméthylbiphényle ou d'un diisocyanate de phénylène.

4. Joint d'étanchéité selon au moins l'une quelconque des revendications précédentes, le polyuréthane thermoplastique pouvant être obtenu par transformation d'au moins un polyol qui est un polycarbonate, un polyester ou un polyéther.

5. Joint d'étanchéité selon au moins l'une quelconque des revendications précédentes, la polycétone thermoplastique étant un terpolymère qui peut être obtenu préférablement par une réaction de polymérisation en utilisant les monomères éthylène et propylène.

6. Joint d'étanchéité selon au moins l'une quelconque des revendications précédentes, le polyuréthane thermoplastique pouvant être obtenu par transformation d'un isocyanate de diphénylméthylène, choisi parmi un diisocyanate de diphénylméthane, un diisocyanate de diméthylbiphényle et un diisocyanate de phénylène, avec un composant de type polyol qui est un polycarbonatediol.

7. Joint d'étanchéité selon au moins l'une quelconque des revendications précédentes, le polyuréthane thermoplastique pouvant être obtenu par transformation de 4,4'-diisocyanate de diphénylméthane avec un composant de type polyol qui est un polycarbonatediol à base de 1,6-hexanediol, préférablement doté d'un poids moléculaire de 2 000 g/mole, et de di(β-hydroxyéthyl)éther d'hydroquinone.

8. Joint d'étanchéité selon au moins l'une quelconque des revendications 1 à 6, le polyuréthane thermoplastique pouvant être obtenu par transformation de 3,3'-diméthyl-4,4'-diisocyanate de biphényle avec un mélange de polyols contenant un polycarbonatepolyol, un polyétherpolyol et un polyesterpolyol, à chaque fois doté d'un poids moléculaire de 2 000 g/mole, et de 1,4-butanediol en tant qu'extenseur de chaîne.

9. Joint d'étanchéité selon au moins l'une quelconque des revendications précédentes, la proportion du polyuréthane dans le mélange de polymères étant de 3 à 50 % en poids et la proportion de la polycétone étant de 50 à 97 % en poids.

10. Joint d'étanchéité selon au moins l'une quelconque des revendications précédentes, le joint d'étanchéité pouvant être obtenu au moyen d'un procédé dans lequel un point de confluence se forme.

11. Utilisation du mélange de polymères selon au moins l'une des revendications 1 à 9 pour la fabrication de joints d'étanchéité, le joint d'étanchéité étant préférablement fabriqué dans un procédé de moulage par injection.

12. Procédé pour la fabrication de joints d'étanchéité, contenant les étapes :
a) mise à disposition d'un mélange de polymères selon l'une quelconque des revendications 1 à 9,
b) moulage du mélange de polymères pour donner un joint d'étanchéité.

13. Procédé pour la fabrication de joints d'étanchéité selon la revendication 12, l'étape b) étant réalisée dans un procédé de moulage par injection, dans lequel un point de confluence du mélange de polymères se forme.

14. Joint d'étanchéité pouvant être obtenu par le procédé selon la revendication 12 ou 13.
